# FASCICULE DE BREVET EUROPEEN

(11) **EP 0 838 909 B1**
(45) Date de publication et mention de la délivrance du brevet: **21.07.2004**
(21) Numéro de dépôt: 97402457.2
(22) Date de dépôt: 17.10.1997
(51) Int. Cl.: H04B 1/38, H04B 7/185

(54) **Dispositif pour permettre l'utilisation dans un aéronef de moyens de radiocommunication**
Vorrichtung zum Erlauben das Gebrauch eines Funkgerätes in einem Flugzeug
Means for allowing the use of a radio communication apparatus in an aeroplane

(30) Priorité: 28.10.1996 FR 9613124
(43) Date de publication de la demande: 29.04.1998
(73) Titulaire: AIRBUS France, 31060 Toulouse (FR)
(72) Inventeur: Lemozit, Christian, 31820 Pibrac (FR); Corbefin, René, 31700 Mondonville (FR)
(74) Mandataire: Bonnetat, Christian

(56) Documents cités:
- EP-A- 0 559 187
- WO-A-94/28684
- LIPOFF S: "A MULTIPURPOSE CORDLESS PHONE FOR USE IN BOTH PRIVATE AND PUBLIC SYSTEMS" PROCEEDINGS OF THE INTERNATIONAL CONFERENCE ON CONSUMER ELECTRONICS (ICCE), ROSEMONT, JUNE 6 - 9, 1989, no. CONF. 8, 6 juin 1989, INSTITUTE OF ELECTRICAL AND ELECTRONICS ENGINEERS, page 28/29 XP000075962

## Description

La présente invention concerne un système de téléphonie mobile utilisable dans un aéronef ainsi qu'un moyen de radiocommunication conçu à cet effet.

Plus précisément, la présente invention s'applique à un moyen de radiocommunication personnel qui comprend notamment :
- une unité de traitement d'informations numérisées ;
- un moyen d'émission émettant, sous forme d'ondes électromagnétiques, des informations numérisées reçues de ladite unité de traitement ; et
- un moyen de réception détectant, sous forme d'ondes électromagnétiques, des informations numérisées qui sont transmises à ladite unité de traitement.

Bien que la présente invention soit plus particulièrement appropriée à un téléphone mobile, elle peut également s'appliquer à d'autres moyens de radiocommunication, tels que par exemple des terminaux informatiques portables. De façon connue, de tels terminaux portables permettent de réaliser une communication informatique, grâce à leur connexion à des réseaux informatiques à l'aide de modem radio intégrés.

On sait que les téléphones mobiles dont le nombre s'est fortement accru en peu de temps, grâce à un coût d'acquisition réduit et à un prix de communication abordable, sont interdits d'utilisation à bord des aéronefs, notamment des avions de transport civil, pour des raisons de sécurité. Cette interdiction est en effet nécessaire pour éviter toute interférence électromagnétique avec les systèmes électroniques de bord de l'aéronef, susceptible d'être très dommageable, en particulier au décollage et à l'atterrissage de l'aéronef.

Aussi, lorsque les passagers d'un avion de transport veulent communiquer avec leurs interlocuteurs habituels, ils doivent utiliser les systèmes de communication prévus le cas échéant à cet effet sur l'avion.

Ainsi, en ce qui concerne par exemple les communications téléphoniques, des combinés spécifiques qui équipent généralement les avions sont souvent mis à la disposition des passagers, pour leur permettre d'appeler les abonnés du réseau téléphonique terrestre.

Les moyens de communication radio mis en oeuvre à cet effet utilisent :
- soit des satellites géostationnaires ;
- soit des installations prévues au sol et destinées au transport aérien.

De plus, des installations spécifiques doivent être agencées au sol, pour coopérer avec ces moyens de communication radio, et notamment pour transmettre les communications téléphoniques vers les personnes appelées.

Les solutions précitées ne sont pas satisfaisantes, puisqu'elles utilisent des installations complexes et coûteuses, destinées en priorité au transport aérien, ce qui entraîne un coût de communication extrêmement élevé.

De plus, ces solutions présentent les inconvénients suivants :
- les moyens de communication qui utilisent des installations au sol ne présentent qu'une couverture géographique limitée. De plus, comme plusieurs systèmes de communication de types différents existent, différents équipements appropriés sont nécessaires sur l'aéronef pour obtenir un champ de communication satisfaisant ; et
- les moyens de communication qui utilisent des satellites géostationnaires ne présentent pas une couverture mondiale (les zones polaires ne sont, par exemple, pas couvertes) et le nombre limité de canaux disponibles réduit les capacités de communication.

La présente invention a pour objet de remédier à ces inconvénients. Elle concerne un dispositif pour permettre l'utilisation de façon simple et sans risque, dans un aéronef d'au moins un moyen de radiocommunication personnel du type rappelé ci-dessus, en particulier un téléphone mobile.

A cet effet, selon l'invention :
- ledit moyen de radiocommunication comporte de plus :
   . un premier moyen de connexion prévu sur la liaison entre l'unité de traitement et le moyen d'émission et susceptible d'être connecté à un premier moyen de transmission d'informations numérisées de sorte que, lorsque la connexion est établie entre ledit premier moyen de connexion et ledit premier moyen de transmission, les informations numérisées issues de l'unité de traitement ne sont pas transmises audit moyen d'émission, mais sont véhiculées par ledit premier moyen de transmission ; et
   . un second moyen de connexion prévu sur la liaison entre l'unité de traitement et le moyen de réception et susceptible d'être connecté à un second moyen de transmission d'informations numérisées de sorte que, lorsque la connexion est établie entre ledit second moyen de connexion et ledit second moyen de transmission, les informations numérisées issues du moyen de réception ne sont pas transmises à l'unité de traitement, mais des informations numérisées peuvent être véhiculées par ledit second moyen de transmission vers ladite unité de traitement ; et
- ledit dispositif comporte :
   . un émetteur d'ondes électromagnétiques, susceptible d'émettre à l'extérieur de l'aéronef, sous forme d'ondes électromagnétiques, des informations numérisées reçues ;
   . un récepteur d'ondes électromagnétiques, susceptible de détecter à l'extérieur de l'aéronef, sous forme d'ondes électromagnétiques, des informations numérisées;
   . ledit premier moyen de transmission relié audit émetteur et connecté audit premier moyen de connexion ; et
   . ledit second moyen de transmission relié audit récepteur et connecté audit second moyen de connexion.

Ainsi, grâce à l'invention, tout passager de l'aéronef peut utiliser un moyen de radiocommunication personnel, par exemple un téléphone mobile ou un terminal portable, dans les mêmes conditions de service que s'il se trouvait à terre dans son bureau ou sa voiture, et ceci sans danger d'interférence avec les systèmes électroniques de bord, puisque l'action des moyens d'émission et de réception du moyen de radiocommunication considéré est inhibée lors de son utilisation et que l'émetteur du dispositif conforme à l'invention émet à l'extérieur de l'aéronef.

De plus, grâce audit dispositif conforme à l'invention, le détenteur d'un tel moyen de radiocommunication peut non seulement appeler un correspondant, mais aussi être appelé à son numéro personnel, et ceci dans les mêmes conditions qu'au sol.

En outre, de façon avantageuse :
- ledit émetteur et ledit récepteur sont intégrés dans une balise d'émission et de réception ; et/ou
- lesdits premier et second moyens de transmission font partie d'un même câble de connexion. Ainsi, le simple fait de brancher ce câble de connexion sur le téléphone mobile ou le terminal portable inhibe la partie radioélectrique de ce dernier et empêche toute émission électromagnétique intempestive et dangereuse, à l'intérieur de l'aéronef.

Pour des raisons de facilité d'utilisation, de façon avantageuse, l'extrémité libre dudit câble de connexion, destinée à être reliée simultanément auxdits premier et second moyens de connexion, est accessible à partir d'un siège de passager de l'aéronef.

De préférence, l'aéronef comporte des câbles de connexion à proximité d'au moins une pluralité de sièges de passager, ainsi que des moyens d'alimentation électrique, auxquels peut être raccordé à chaque fois un système de chargement électrique d'un moyen de radiocommunication personnel.

Par ailleurs, pour permettre l'utilisation simultanée d'une pluralité de moyens de radiocommunication, le dispositif conforme à l'invention comporte une pluralité de paires de premier et second moyens de transmission, reliés respectivement audit émetteur et audit récepteur, chacune desdites paires de premier et second moyens de transmission pouvant être connectée à l'un desdits moyens de radiocommunication.

En outre, afin de réduire le câblage et donc le coût d'installation, le dispositif conforme à l'invention comporte de plus plusieurs boîtiers de connexion, chacun desdits boîtiers de connexion étant relié, d'une part, à l'émetteur et au récepteur et, d'autre part, à un groupe de câbles de connexion, de manière à permettre une transmission d'informations numérisées entre l'émetteur et le récepteur, et les moyens de radiocommunication connectés le cas échéant auxdits câbles de connexion.

Par ailleurs, dans un mode de réalisation particulièrement avantageux de l'invention, on peut prévoir un moyen d'inhibition susceptible d'émettre à l'intérieur de l'aéronef, sous forme d'ondes électromagnétiques, des ordres d'interdiction d'émission, vers un moyen de radiocommunication lorsque ce dernier est utilisé directement sans être raccordé audit dispositif.

Le document de brevet WO 94 28684 A décrit un système de téléphonie mobile utilisable dans un aéronef, conformément au préambule des revendications 1 et 11 de la présente demande. Dans ledit système, la connexion entre les téléphones portables et le dispositif à l'intérieur de l'avion se fait à travers un socle d'antenne des dits téléphones, ce qui apparemment implique une commutation dans les portables au niveau des signaux de radiofréquence. Dans le système de la présente demande, la commutation à l'intérieur du portable se fait par contre au niveau des liaisons entre l'unité de traitement d'informations numérisées et les moyens d'émission et de réception dudit portable.

Les figures du dessin annexé feront bien comprendre comment l'invention peut être réalisée. Sur ces figures, des références identiques désignent des éléments semblables.

La figure 1 illustre les modes de communication possibles à partir d'un aéronef, au moyen d'un dispositif conforme à l'invention.

La figure 2 illustre schématiquement un moyen de radiocommunication personnel relié à un dispositif conforme à l'invention.

La figure 3 montre des éléments d'un dispositif conforme à l'invention, installés à proximité d'un siège de passager de l'aéronef.

La figure 4 montre un mode de réalisation particulier d'un dispositif conforme à l'invention.

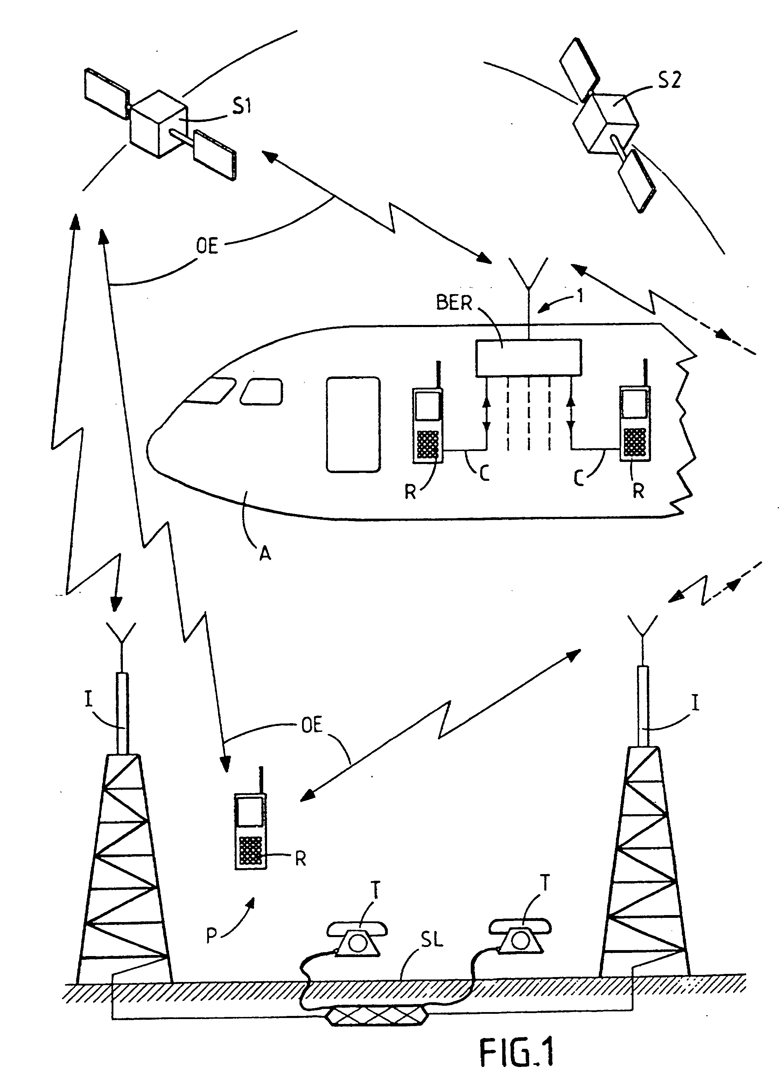

Le dispositif 1 conforme à l'invention est destiné à permettre aux passagers d'un aéronef A, notamment un avion de transport civil, d'utiliser un moyen de radiocommunication R personnel, par exemple un téléphone mobile ou un terminal informatique portable, pour communiquer avec un correspondant se trouvant par exemple au sol, tel que représenté schématiquement sur la figure 1.

A cet effet, les ondes électromagnétiques OE émises à l'aide dudit dispositif 1 à partir de l'aéronef A sont véhiculées, par l'intermédiaire d'un système de satellites S1 et S2 et/ou d'installations I prévus sur terre, vers ce correspondant non représenté, qui se trouve sur le réseau téléphonique terrestre (soit sur le réseau câblé, comme illustré par des postes de téléphone T, soit sur le réseau radiotéléphonique, comme illustré par un moyen de radiocommunication R en un point P au sol SL).

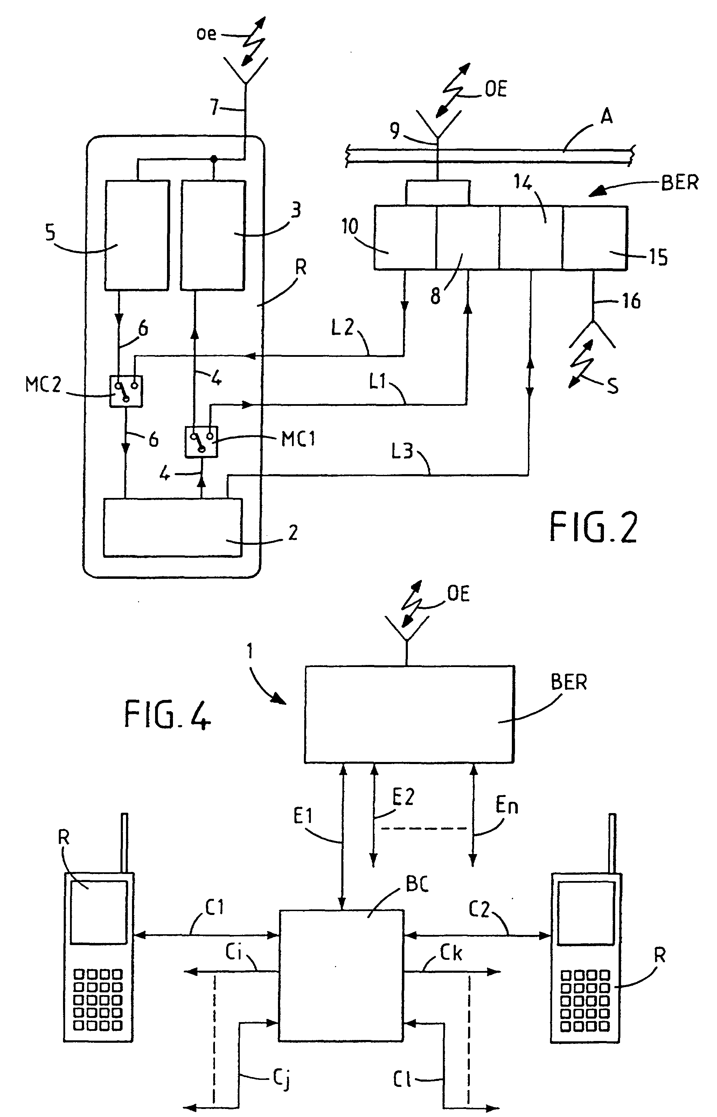

L'invention s'applique plus particulièrement à un moyen de radiocommunication R, représenté sous forme d'un téléphone mobile sur les figures 1 à 4, du type comprenant, tel que représenté sur la figure 2 :
- une unité 2 de traitement d'informations numérisées ;
- un moyen d'émission 3 susceptible d'émettre, sous forme d'ondes électromagnétiques oe, des informations numérisées reçues, par l'intermédiaire d'une liaison 4, de l'unité de traitement 2 ; et
- un moyen de réception 5 susceptible de détecter, sous forme d'ondes électromagnétiques oe, des informations numérisées qui sont transmises à ladite unité de traitement 2 par l'intermédiaire d'une liaison 6.

Lesdits moyens d'émission 3 et de réception 5 comportent une antenne commune 7 qui émet et détecte lesdites ondes électromagnétiques oe.

On sait qu'il est interdit aux passagers d'un aéronef A d'utiliser un tel moyen de radiocommunication R, notamment pour éviter toute interférence électromagnétique avec les systèmes électroniques de bord de l'aéronef A.

Le dispositif 1 conforme à l'invention a pour objet de remédier à cet inconvénient. De plus, selon l'invention, le moyen de radiocommunication R décrit ci-dessus est perfectionné pour pouvoir être utilisé sur ledit dispositif 1.

A cet effet, ledit moyen de radiocommunication R comporte de plus, selon l'invention, et tel que représenté sur la figure 2 :
- un moyen de connexion MC1 prévu sur la liaison 4 entre l'unité de traitement 2 et le moyen d'émission 3 et susceptible d'être connecté à un moyen L1 de transmission d'informations numérisées, précisé ci-dessous, de sorte que, lorsque la connexion est établie entre ledit moyen de connexion MC1 et ledit moyen de transmission L1, les informations numérisées issues de l'unité de traitement 2 ne sont pas transmises audit moyen d'émission 3, mais sont véhiculées par ledit moyen de transmission L1 ; et
- un moyen de connexion MC2 prévu sur la liaison 6 entre l'unité de traitement 2 et le moyen de réception 5 et susceptible d'être connecté à un moyen L2 de transmission d'informations numérisées, également précisé ci-dessous, de sorte que, lorsque la connexion est établie entre ledit moyen de connexion MC2 et ledit moyen de transmission L2, les informations numérisées issues du moyen de réception 5 ne sont pas transmises à l'unité de traitement 2, mais des informations numérisées précisées ci-dessous peuvent être véhiculées par ledit moyen de transmission L2 vers ladite unité de traitement 2.

De plus, pour permettre l'utilisation dans l'aéronef A du moyen de radiocommunication R présentant les caractéristiques précitées, le dispositif 1 conforme à l'invention comporte :
- un émetteur 8 d'ondes électromagnétiques OE, relié à une antenne 9 agencée à l'extérieur de l'aéronef A et susceptible d'émettre à l'extérieur dudit aéronef A, sous forme d'ondes électromagnétiques OE, des informations numérisées reçues ;
- un récepteur 10 d'ondes électromagnétiques, également relié à l'antenne 9 et susceptible de détecter à l'extérieur de l'aéronef A, sous forme d'ondes électromagnétiques OE, des informations numérisées ;
- ledit moyen de transmission L1 relié audit émetteur 8 et connecté audit moyen de connexion MC1 lors de l'utilisation du dispositif 1 ; et
- ledit moyen de transmission L2 relié audit récepteur 10 et connecté audit moyen de connexion MC2, lors de l'utilisation dudit dispositif 1.

Ainsi, grâce audit dispositif 1 :
- les informations numérisées, issues de l'unité de traitement 2 et devant être émises, ne sont pas émises à l'intérieur de l'aéronef A par l'antenne 7 du moyen d'émission 3, mais sont émises à l'extérieur dudit aéronef A par l'antenne 9 de l'émetteur 8 ; et
- l'unité de traitement 2 reçoit des informations captées à l'extérieur de l'aéronef A par le récepteur 10 et transmises par le moyen de transmission L2.

Ainsi, tout danger d'interférence avec les systèmes électroniques de bord de l'aéronef A est exclu.

Le détenteur d'un tel moyen de radiocommunication R relié au dispositif 1 peut, par conséquent, appeler un correspondant ou être appelé par un correspondant, qui est sur le réseau téléphonique terrestre (réseau câblé et/ou réseau radiotéléphonique), ou qui est muni d'un moyen de radiocommunication R analogue et qui se trouve :
- dans un autre aéronef équipé également d'un dispositif conforme à l'invention ; ou même
- dans le même aéronef A.

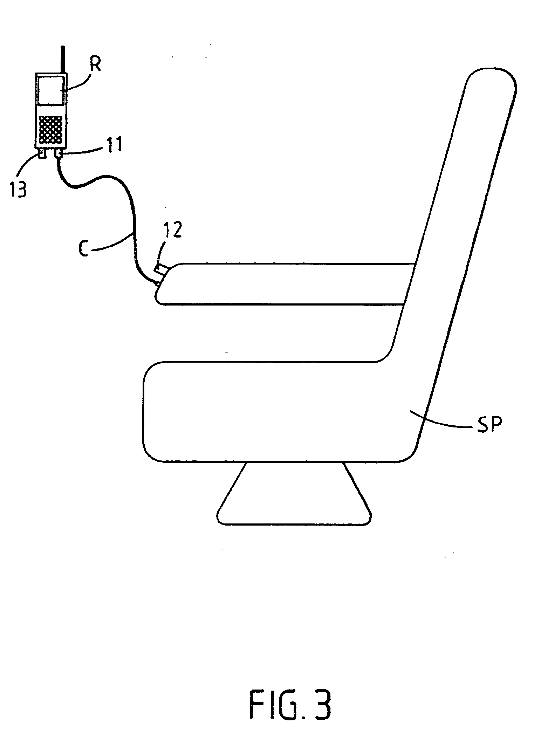

De préférence, selon l'invention :
- l'émetteur 8, le récepteur 10 et l'antenne 9 sont intégrés dans une balise d'émission et de réception BER ; et
- les moyens de transmission L1 et L2 font partie d'un même câble de connexion C, tel que représenté sur la figure 3.

Il suffit, par conséquent, de brancher ce câble de connexion C sur un connecteur 11 du moyen de radiocommunication R, de préférence normalisé, prévu à cet effet et relié simultanément aux moyens de connexion MC1 et MC2, pour pouvoir utiliser ledit moyen de radiocommunication R et pour inhiber en même temps toute émission par le moyen d'émission 3.

De plus, pour permettre une utilisation simultanée d'une pluralité de moyens de radiocommunication R, le dispositif 1 comporte une pluralité de câbles de connexion C reliés à chaque fois à la balise d'émission et de réception BER.

De préférence, ces câbles C à connecter sur les moyens de radiocommunication R sont disponibles à proximité d'une pluralité, ou même de la totalité, des sièges de passager SP de l'aéronef A.

De plus, à proximité de chacun desdits sièges de passager SP, par exemple sur l'accoudoir ou la tablette, on peut agencer un moyen d'alimentation électrique 12, par exemple une embase de type allume-cigare, sur lequel peut être raccordé le cas échéant un système de chargement électrique 13 du moyen de radiocommunication R, pour réaliser le chargement électrique dudit moyen de radiocommunication R.

Par ailleurs, pour réduire l'encombrement du dispositif 1 et notamment la longueur du câblage, le dispositif 1 comporte, dans un mode de réalisation particulièrement avantageux et représenté schématiquement sur la figure 4, une pluralité de boîtes de connexion BC, dont on a représenté une seule sur la figure 4, qui :
- d'une part, sont reliées respectivement par l'intermédiaire de liaisons El à En à la balise d'émission et de réception BER ; et
- d'autre part, comportent chacune une pluralité de câbles de connexion C1, C2, Ci, Cj, Ck et C1, susceptibles d'être connectés à des moyens de radiocommunication R.

Ce mode de réalisation permet donc de réduire la longueur des câbles de connexion qui ne sont plus reliés directement à la balise BER, mais aux boîtes de connexion correspondantes BC, chacune desdites boîtes de connexion BC étant prévue pour un groupe de sièges de passager SP.

Par ailleurs, le dispositif 1 comporte également, comme représenté sur la figure 2 :
- une unité de contrôle 14 qui peut être connectée, par l'intermédiaire d'une liaison double L3, à l'unité de traitement 2 d'un moyen de radiocommunication R, pour contrôler le fonctionnement dudit dispositif 1 et dudit moyen de radiocommunication R ; et
- un moyen d'inhibition 15 susceptible d'émettre, à l'intérieur de l'aéronef A, au moyen d'une antenne 16, sous forme d'ondes électromagnétiques S de faible puissance, des ordres d'interdiction d'émission, vers un moyen de radiocommunication R, lorsque ce dernier est utilisé directement sans être raccordé audit dispositif 1.

## Revendications

1. Système de téléphonie mobile utilisable dans un aéronef (A), ledit système comportant:
a) au moins un moyen de radiocommunication personnel (R), en particulier un téléphone mobile, et
b) un dispositif (1) de communication, ledit dispositif (1) comportant:
- un émetteur (8) d'ondes électromagnétiques (OE) susceptible d'émettre à l'extérieur de l'aéronef (A), sous forme d'ondes électromagnétiques (OE), des informations numérisées reçues ;
- un récepteur (10) d'ondes électromagnétiques (OE), susceptible de détecter à l'extérieur de l'aéronef (A), sous forme d'ondes électromagnétiques (OE), des informations numérisées ; et
- des moyens de transmission (L1, L2) susceptibles d'être connectés entre, d'une part, ledit moyen de radiocommunication (R) et, d'autre part, lesdits émetteur (8) et récepteur (10), de sorte que, lorsque lesdits moyens de transmission (L1, L2) établissent la connexion entre ledit moyen de radiocommunication (R) et lesdits émetteur (8) et récepteur (10), ledit moyen de radiocommunication émet et reçoit uniquement par l'intermédiaire de ces derniers,
ledit moyen de radiocommunication (R) étant par ailleurs du type connu comportant :
- une unité (2) de traitement d'informations numérisées ;
- un moyen d'émission (3) émettant, sous forme d'ondes électromagnétiques (OE), des informations numérisées reçues de ladite unité de traitement (2) par l'intermédiaire d'une première liaison (4) ; et
- un moyen de réception (5) détectant, sous forme d'ondes électromagnétiques (OE), des informations numérisées qui sont transmises à ladite unité de traitement (2) par fintennédiaire d'une seconde liaison (6),
**caractérisé en ce que** ledit moyen de radiocommunication (R) comporte :
- un premier moyen de connexion (MC1) prévu sur ladite première liaison (4) entre l'unité de traitement (2) et le moyen d'émission (3) et susceptible d'être connecté audit émetteur (8) par l'un (L1)desdits moyens de transmission (L1, L2), de sorte que, lorsque la connexion est établie entre ledit premier moyen de connexion (MC1) et ledit émetteur (8), les informations numérisées issues de l'unité de traitement (2) ne sont pas transmises audit moyen d'émission (3), mais audit émetteur (8) ; et
- un second moyen de connexion (MC2) prévu sur ladite seconde liaison (6) entre l'unité de traitement (2) et le moyen de réception (5) et susceptible d'être connecté audit récepteur (10), de sorte que, lorsque la connexion est établie entre ledit second moyen de connexion (MC2) et ledit récepteur (10), les informations numérisées traitées par l'unité de traitement (2) ne proviennent pas du moyen de réception (5), mais dudit récepteur (10).

2. Système selon la revendication 1,
**caractérisé en ce que** ledit émetteur (8) et ledit récepteur (10) sont intégrés dans une balise d'émission et de réception (BER).

3. Système selon l'une quelconque des revendications 1 ou 2,
**caractérisé en ce que** lesdits premier et second moyens de transmission (L1, L2) font partie d'un même câble de connexion (C).

4. Système selon la revendication 3,
**caractérisé en ce que** l'extrémité libre dudit câble de connexion (C), destinée à être reliée simultanément auxdits premier et second moyens de connexion (MC1, MC2), est accessible à partir d'un siège de passager (SP) de l'aéronef (A).

5. Système selon l'une quelconque des revendications précédentes, dont ledit moyen de radiocommunication (R) est muni d'un système de chargement électrique (13),
**caractérisé en ce qu'**il comporte un moyen d'alimentation électrique (12) prévu à proximité d'un siège de passager (SP) de l'aéronef (A), le système de chargement électrique (13) du moyen de radiocommunication (R) pouvant être raccordé en vue de son chargement audit moyen d'alimentation électrique (12).

6. Système selon l'une quelconque des revendications 1 à 5,pour permettre l'utilisation simultanée d'une pluralité de moyens de radiocommunication (R),
**caractérisé en ce que** ledit système comporte une pluralité de paires de premier et second moyens de transmission (L1, L2), reliés respectivement audit émetteur (8) et audit récepteur (10), chacune desdites paires de premier et second moyens de transmission (L1, L2) pouvant être connectée à l'un desdits moyens de radiocommunication (R).

7. Système selon les revendications 3 et 6,
**caractérisé en ce qu'**il comporte des câbles de connexion (C) à proximité d'au moins une pluralité de sièges de passager (SP) de l'aéronef (A).

8. Système selon les revendications 5 et 6,
**caractérisé en ce qu'**il comporte des moyens d'alimentation électrique (12) à proximité d'au moins une pluralité de sièges de passager (SP) de l'aéronef (A).

9. Système selon l'une quelconque des revendications 6 à 8,
**caractérisé en ce qu'**il comporte plusieurs boîtiers de connexion (BC), chacun desdits boîtiers de connexion (BC) étant relié, d'une part, à l'émetteur (8) et au récepteur (10) et, d'autre part, à un groupe de câbles de connexion (C1, C2, Ci, Cj, Ck, Cl), de manière à permettre une transmission d'informations numérisées entre l'émetteur (8) et le récepteur que ledit système (10), et les moyens de radiocommunication (R) connectés le cas échéant auxdits câbles de connexion (C1, C2).

10. Système selon l'une quelconque des revendications précédentes,
**caractérisé en ce qu'**il comporte un moyen d'inhibition (15) susceptible d'émettre à l'intérieur de l'aéronef (A), sous forme d'ondes électromagnétiques (S), des ordres d'interdiction d'émission, vers un moyen de radiocommunication (R) lorsque ce dernier est utilisé directement sans être raccordé audit dispositif (1).

11. Moyen de radiocommunication personnel, en particulier un téléphone mobile, qui comporte notamment :
- une unité (2) de traitement d'informations numérisées ;
- un moyen d'émission (3) émettant, sous forme d'ondes électromagnétiques (OE), des informations numérisées reçues de ladite unité de traitement (2) par l'intermédiaire d'une première liaison (4) ; et
- un moyen de réception (5) détectant, sous forme d'ondes électromagnétiques (OE), des informations numérisées qui sont transmises à ladite unité de traitement (2) par l'intermédiaire d'une seconde liaison (6),
**caractérisé en ce qu'**il comporte de plus :
- un premier moyen de connexion (MC1) prévu sur ladite première liaison (4) entre l'unité de traitement (2) et le moyen d'émission (3) et susceptible d'être connecté à un premier moyen (L1) de transmission d'informations numérisées de sorte que, lorsque la connexion est établie entre ledit premier moyen de connexion (MC1) et ledit premier moyen de transmission (L1), les informations numérisées issues de l'unité de traitement (2) ne sont pas transmises audit moyen d'émission (3), mais sont véhiculées par ledit premier moyen de transmission (L1) ; et
- un second moyen de connexion (MC2) prévu sur ladite seconde liaison (6) entre l'unité de traitement (2) et le moyen de réception (5) et susceptible d'être connecté à un second moyen (L2) de transmission d'informations numérisées de sorte que, lorsque la connexion est établie entre ledit second moyen de connexion (MC2) et ledit second moyen de transmission (L2), les informations numérisées issues du moyen de réception (5) ne sont pas transmises à l'unité de traitement (2), mais des informations numérisées peuvent être véhiculées par ledit second moyen de transmission (L2) vers ladite unité de traitement (2).

## Claims

1. Mobile telephone system that can be used in an aircraft (A), said system comprising:
a) at least one personal means of radio communication (R), especially a mobile telephone; and
b) a communication device (1),
said device (1) including:
- a transmitter (8) of electromagnetic waves (OE) capable of transmitting out of the aircraft (A), in the form of electromagnetic waves (OE), digitized information received;
- a receiver (10) of electromagnetic waves (OE), capable of detecting outside the aircraft (A), in the form of electromagnetic waves (OE), digitized information; and
- means of sending (L1, L2) able to be connected between, on the one hand, said means of radio communication (R) and, on the other hand, said transmitter (8) and receiver (10), so that, when said means of sending (L1, L2) establish the connection between said means of radio communication (R) and said transmitter (8) and receiver (10), said means of radio communication transmit and receive only by way of these latter two,
said means of radio communication (R) being moreover of the known type comprising:
- a unit (2) for processing digitized information;
- a means of transmission (3) transmitting, in the form of electromagnetic waves (OE), digitized information received from said processing unit (2) through a first link (4); and
- a means of reception (5) detecting, in the form of electromagnetic waves (OE), digitized information which is sent to said processing unit (2) through a second link (6),
**characterized in that** said means of radio communication (R) includes:
- a first means of connection (MC1) provided on said first link (4) between the processing unit (2) and the transmission means (3) and capable of being connected to said transmitter (8) via one (L1) of said means of sending (L1, L2), so that, when the connection is established between said first means, of connection (MC1), and said transmitter (8), the digitized information emanating from the processing unit (2) is not sent to said means of transmission (3), but to said transmitter (8); and
- a second means of connection (MC2) provided on said second link (6) between the processing unit (2) and the reception means (5) and capable of being connected to said receiver (10), so that, when the connection is established between said second means of connection (MC2) and said receiver (10), the digitized information processed by the processing unit (2) does not come from the reception means (5) but from said receiver (10).

2. System according to Claim 1,
**characterized in that** said transmitter (8) and said receiver (10) are integrated into a transmit and receive beacon (BER).

3. System according to either of Claims 1 and 2,
**characterized in that** said first and second means of sending (L1, L2) form part of one and the same connection cable (C).

4. System according to Claim 3,
**characterized in that** the free end of said connection cable (C), said end being intended to be linked simultaneously to said first and second means of connection (MC1, MC2), is accessible from a passenger seat (SP) of the aircraft (A).

5. System according to any one of the preceding claims, said radio communication means (R) of which are furnished with an electrical charging system (13),
**characterized in that** it includes a means of electrical supply (12) provided in proximity to a passenger seat (SP) of the aircraft (A), it being possible for the electrical charging system (13) of the radio communication means (R) to be plugged with a view to its charging into said electrical supply means (12).

6. System according to any one of Claims 1 to 5 for allowing the simultaneous use of a plurality of radio communication means (R),
**characterized in that** said system includes a plurality of pairs of first and second means of sending (L1, L2), respectively linked to said transmitter (8) and to said receiver (10), each of said pairs of first and second means of sending (L1, L2) being able to be connected to one of said radio communication means (R).

7. System according to Claims 3 and 6,
**characterized in that** it includes connection cables (C) in proximity to at least a plurality of passenger seats (SP) of the aircraft (A).

8. System according to Claims 5 and 6,
**characterized in that** it includes electrical supply means (12) in proximity to at least a plurality of passenger seats (SP) of the aircraft (A).

9. System according to any one of Claims 6 to 8,
**characterized in that** it includes several connection boxes (BC), each of said connection boxes (BC) being linked, on the one hand, to the transmitter (8) and to the receiver (10) and, on the other hand, to a group of connection cables (C1, C2, Ci, Cj, Ck, C1), in such a way as to allow a sending of digitized information between the transmitter (8) and the receiver (10), and the radio communication means (R) connected as the case may be to said connection cables (C1, C2).

10. System according to any one of the preceding claims,
**characterized in that** it includes a means of disabling (15) capable of transmitting inside the aircraft (A), in the form of electromagnetic waves (S), transmission inhibition commands, to a radio communication means (R) when the latter is used directly without being plugged into said device (1).

11. Personal means of radio communication, especially a mobile telephone, which includes in particular:
- a unit (2) for processing digitized information;
- a means of transmission (3) transmitting, in the form of electromagnetic waves (OE), digitized information received from said processing unit (2) through a first link (4); and
- a means of reception (5) detecting, in the form of electromagnetic waves (OE), digitized information which is sent to said processing unit (2) through a second link (6),
**characterized in that** it furthermore includes:
- a first means of connection (MC1) provided on said first link (4) between the processing unit (2) and the transmission means (3) and capable of being connected to a first means (L1) of sending digitized information so that, when the connection is established between said first means of connection (MC1) and said first means of sending (L1), the digitized information emanating from the processing unit (2) is not sent to said means of transmission (3), but is conveyed by said first means of sending (L1); and
- a second means of connection (MC2) provided on said second link (6) between the processing unit (2) and the reception means (5) and capable of being connected to a second means (L2) of sending .digitized information so that, when the connection is established between said second means of connection (MC2) and said second means of sending (L2), the digitized information emanating from the reception means (5) is not_ sent to the processing unit (2), but digitized information can be conveyed by said second means of sending (L2) to said processing unit (2).

## Patentansprüche

1. Mobilfunksystem zum Gebrauch in einem Flugzeug (A), wobei das System Folgendes aufweist:
a) mindestens ein persönliches Funkgerät (R), insbesondere ein Mobiltelefon; und
b) eine Kommunikationsvorrichtung (1),
wobei die Vorrichtung (1) Folgendes aufweist:
- einen Sender (8) zur Emission von elektromagnetischen Wellen (OE), der imstande ist, die digitalisierten Daten, die er erhält, außerhalb des Flugzeugs (A) in Form von elektromagnetischen Weiten (OE) zu senden; und
- einen Empfänger (10) zum Empfang von elektromagnetischen Wellen (OE), der imstande ist, außerhalb des Flugzeugs (A) digitalisierte Daten in Form von elektromagnetischen Wellen (OE) zu erfassen; und Übertragungsvorrichtungen (L1, L2), die zwischen das Funkgerät (R) einerseits und dem Sender (8) und dem Empfänger (10) andererseits geschaltet werden können, so dass das Funkgerät, wenn die Übertragungsvorrichtungen (L1, L2) die Verbindung zwischen dem Funkgerät (R) und dem Sender (8) und dem Empfänger (10) herstellen, nur mit Hilfe des Senders (8) und des Empfängers (10) Daten sendet und empfängt,
wobei das Funkgerät (R) außerdem zu der bekannten Typklasse gehört, die Folgendes aufweist:
- eine Datenverarbeitungseinheit (2) für digitalisierte Daten;
- eine Sendeeinrichtung (3), die digitalisierte Daten, die sie mit Hilfe einer ersten Leitung (4) von der Datenverarbeitungseinheit (2) erhält, in Form von elektromagnetischen Wellen (OE) emittiert; und
- eine Empfangseinrichtung (5), die digitalisierte Daten in Form von elektromagnetischen Wellen (OE) erfasst, die mit Hilfe einer zweiten Leitung (6) an die Datenverarbeitungseinheit (2) übertragen werden,
**dadurch gekennzeichnet, dass** das Funkgerät (R) Folgendes aufweist:
- ein erstes Schaltgerät (MC1), das auf der ersten Leitung (4) zwischen der Datenverarbeitungseinheit (2) und der Sendeeinrichtung (3) vorgesehen ist und mit einer (L1) der Übertragungsvorrichtungen (L1, L2) mit dem Sender (8) verbunden werden kann, so dass, wenn die Verbindung zwischen dem ersten Schaltgerät (MC1) und dem Sender (8) hergestellt wird, die digitalisierten Daten, die von der Datenverarbeitungseinheit (2) stammen, nicht an die Sendeeinrichtung (3) übertragen werden, sondem an den Sender (8); und
- ein zweites Schaftgerät (MC2), das auf der zweiten Leitung (6) zwischen der Datenverarbeitungseinheit (2) und der Empfangseinrichtung (5) vorgesehen ist und mit dem Empfänger (10) verbunden werden kann, so dass, wenn die Verbindung zwischen dem zweiten Schaltgerät (MC2) und dem Empfänger (10) hergestellt wird, die digitalisierten, von der Datenverarbeitungseinheit (2) verarbeiteten Daten nicht von der Empfangseinrichtung (5) kommen, sondern vom Empfänger (10).

2. System gemäß Anspruch 1,
**dadurch gekennzeichnet, dass** der Sender (8) und der Empfänger (10) in eine Sende- und Empfangsbake (BER) integriert sind.

3. System gemäß einem der Ansprüche 1 oder 2,
**dadurch gekennzeichnet, dass** die erste und die zweite Übertragungsvorrichtung (L1, L2) zum selben Schaltkabel (C) gehören.

4. System gemäß Anspruch 3,
**dadurch gekennzeichnet, dass** das freie Ende des Schaftkabels (C), das so ausgelegt ist, dass es gleichzeitig mit dem ersten und dem zweiten Schaltgerät (MC1, MC2) verbunden werden kann, von einem Fluggastsitz (SP) des Flugzeugs (A) aus zugänglich ist.

5. System gemäß einem der vorstehend genannten Ansprüche, dessen Funkgerät (R) mit einem elektrischen Ladesystem (13) versehen ist,
**dadurch gekennzeichnet, dass** es eine elektrische Stromversorgungsvorrichtung (12) aufweist, die in der Nähe eines Fluggastsitzes (SP) des Flugzeugs (A) vorgesehen ist, wobei das elektrische Ladesystem (13) des Funkgeräts (R) zum Laden an die elektrische Stromversorgungsvorrichtung (12) angeschlossen werden kann.

6. System gemäß einem der Ansprüche 1 bis 5, um den gleichzeitigen Gebrauch einer Vielzahl von Funkgeräten (R) zu erlauben,
**dadurch gekennzeichnet, dass** das System eine Vielzahl von Paaren aus ersten und zweiten Übertragungsvorrichtungen (L1, L2) aufweist, die mit dem Sender (8) beziehungsweise dem Empfänger (10) verbunden sind, wobei jedes dieser Paare aus ersten und zweiten Übertragungsvorrichtungen (L1, L2) an eines der Funkgeräte (R) angeschlossen werden kann.

7. System gemäß den Ansprüchen 3 und 6,
**dadurch gekennzeichnet, dass** es in der Nähe von mindestens einer Vielzahl von Fluggastsitzen (SP) des Flugzeugs (A) Schaltkabel (C) aufweist.

8. System gemäß den Ansprüchen 5 und 6,
**dadurch gekennzeichnet, dass** es in der Nähe von mindestens einer Vielzahl von Fluggastsitzen (SP) des Flugzeugs (A) elektrische Stromversorgungsvorrichtungen (12) aufweist.

9. System gemäß einem der Ansprüche 6 bis 8,
**dadurch gekennzeichnet, dass** es mehrere Klemmenkästen (BC) aufweist, wobei jeder dieser Klemmenkästen (BC) zum einen mit dem Sender (8) und dem Empfänger (10) und zum anderen mit einer Gruppe von Schaftkabeln (C1, C2, Ci, Cj, Ck, Cl) verbunden ist, um die Übertragung von digitalisierten Daten zwischen dem Sender (8) und dem Empfänger (10) und den Funkgeräten (R), die erforderlichenfalls an die Schaltkabel (C1, C2) angeschlossen sind, zu erlauben.

10. System gemäß einem der vorstehend genannten Ansprüche,
**dadurch gekennzeichnet, dass** es eine Sperrvorrichtung (15) aufweist, die imstande ist, im Innem des Flugzeugs (A) Befehle in Form von elektromagnetischen Wellen (S) an ein Funkgerät (R) zu schicken, die dessen Sendefunktion unterdrücken, wenn dieses direkt und ohne Anschluss an die Vorrichtung (1) verwendet wird.

11. Persönliches Funkgerät (R), insbesondere ein Mobiftelefon, das namentlich Folgendes aufweist:
- eine Datenverarbeitungseinheit (2) für digitalisierte Daten;
- eine Sendeeinrichtung (3), die digitalisierte Daten, die sie von der Datenverarbeitungseinheit (2) über eine erste Leitung (4) erhält, in Form von elektromagnetischen Wellen (OE) emittiert; und
- eine Empfangseinrichtung (5), die digitalisierte Daten in Form von elektromagnetischen Wellen (OE) erfasst, die über eine zweite Leitung (6) an die Datenverarbeitungseinheit (2) übertragen werden,
**dadurch gekennzeichnet, dass** es außerdem Folgendes aufweist:
- ein erstes Schaltgerät (MC1), das auf der ersten Leitung (4) zwischen der Datenverarbeitungseinheit (2) und der Sendeeinrichtung (3) vorgesehen ist und mit einer ersten Übertragungsvorrichtung (L1) für digitalisierte Daten verbunden werden kann. so dass, wenn die Verbindung zwischen dem ersten Schaltgerät (MC1) und der ersten Übertragungsvorrichtung (L1) hergestellt wird, die digitalisierten Daten, die von der Datenverarbeitungseinheit (2) stammen, nicht an die Sendeeinrichtung (3) übertragen werden, sondern von der ersten Übertragungsvorrichtung (L1 ) weitergeleitet werden; und
- ein zweites Schaltgerät (MC2), das auf der zweiten Leitung (6) zwischen der Datenverarbeitungseinheit (2) und der Empfangseinrichtung (5) vorgesehen ist und mit einer zweiten Übertragungsvorrichtung (L2) für digitalisierte Daten verbunden werden kann, so dass, wenn die Verbindung zwischen dem zweiten Schaltgerät (MC2) und der zweiten Übertragungsvorrichtung (L2) hergestellt wird, keine digitalisierten Daten von der Empfangseinrichtung (5) an die Datenverarbeitungseinheit (2) übertragen werden, sondern es können digitalisierte Daten von der zweiten Übertragungsvorrichtung (L2) an die Datenverarbeitungseinheit (2) weitergeleitet werden.
